# EUROPEAN PATENT APPLICATION

(11) **EP 2 544 342 A1**
(43) Date of publication of application: **09.01.2013**
(21) Application number: 11750589.1
(22) Date of filing: 28.02.2011
(51) Int. Cl.: H02K 9/19, B60K 7/00, H02K 21/14

(54) **IN-WHEEL MOTOR DRIVE DEVICE AND DESIGN METHOD THEREFOR**

(30) Priority: 04.03.2010 JP 2010047708
(71) Applicant: NTN Corporation, Osaka-shi, Osaka 550-0003 (JP)
(72) Inventor: OZAKI, Takayoshi, Iwata-shi Shizuoka 438-0037 (JP); OKADA, Koichi, Iwata-shi Shizuoka 438-0037 (JP); MAKINO, Yusuke, Iwata-shi Shizuoka 438-0037 (JP)
(74) Representative: Sokolowski, Fabian
(86) International application number: PCT/JP2011/054465
(87) International publication number: WO 2011/108479

(57) **Abstract**

An in-wheel motor drive apparatus is provided that facilitates the dissipation of the heat generated by a motor and that is excellent in cooling performance. A range (L) of number of revolutions within which a motor (B) generates a maximum torque by low-speed-rotation includes a high-output sub-zone (LH) in which a torque is no less than 50% of the maximum torque. In the high-output sub-zone, a loss in a stator represents no less than 50% of a loss in the motor (B), with the loss in the motor consisting of copper loss and core loss. The motor (B) may include cooling medium passage(s) (45) configured to cool coil portion(s) (28) of the stator (23) with a cooling liquid, and the copper loss may represent no less than 25% of the loss in the motor (B).

## Description

### CROSS REFEFRENCE TO THE RELATED APPLICATION

This application is based on and claims Convention priority to Japanese patent application No. 2010-047708, filed March 4, 2010, the entire disclosure of which is herein incorporated by reference as a part of this application.

### BACKGROUND OF THE INVENTION

### (Field of the Invention)

The present invention relates to an in-wheel motor drive apparatus which is mountable to an automotive vehicle and which includes a motor, a reduction gear unit, and a wheel support bearing unit that are coupled with each other. The present invention also relates to a method of designing such an in-wheel motor drive apparatus.

### (Description of Related Art)

An in-wheel motor drive apparatus, in the form of an in-wheel motor unit, for an electrically powered automotive vehicle includes a wheel support bearing unit, for example, what is referred to as a hub bearing unit, a reduction gear unit, and a motor that are coupled with each other, with the motor generating a drive torque that is multiplied by the reduction gear unit (i.e. the number of revolutions is reduced) and is then transmitted via the wheel support bearing unit to a tire. The reduction gear unit may employ a planetary gear system. To ensure a drive's comfortable ride, the reduction gear unit may employ a cycloidal gear device so that an un-sprung weight of a vehicle body is minimized (see, for example, the Patent Document 1 listed below). For similar reasons, a motor with a minimal size is often used. However, such a motor must have a large power density.

### [Prior Art Literature]

[Patent Document 1] JP Laid-open Patent Publication No. 2006-258289

To design the reduction gear unit and the motor as small or compact as possible, it is also important to ensure the reliability of such compact reduction gear unit and motor. Especially, the cooling performance of a motor is one of the concerns here. A sufficient cooling capability must be achieved with a reduced size or a reduced surface area. An accompanying cooling unit may become large in size, but this means that more energy will be consumed to perform cooling.

In particular, a motor for an electrically powered automotive vehicle produces a torque and a rotation speed that vary according to travel conditions of the vehicle. The rated output of such a motor is not expressed by a dot; rather, the rated output is expressed in terms of a surface area defined as a product of a torque and a rotation speed. Characteristics required for such a motor include that: (i) at low-speed rotations, a maximum torque must be generated in a short period of time; (ii) at medium-speed to high-speed rotations, travel with a variable speed over a wide range at a maximum output must be possible, and more. As is discussed in the former characteristic, at low-speed rotations, an excessive torque is generated in a short period of time, but this results in a large amount of energy being supplied to the motor. Thus, to ensure the reliability of an in-wheel motor, the heat generated by the motor must be either reduced or cooled.

The temperature of such an in-wheel motor drive apparatus excessively increases when a motor or a reduction gear unit becomes overloaded. A cycloidal-type reduction gear unit having a high reduction gear ratio - although a motor must make a greater number of revolutions to reach high-speed rotations - leads to reduction in the torque the motor must generate, thus allowing for reduction in the dimensions of the motor. However, such a smaller motor still has to produce the same output as a motor used in conjunction with a reduction gear unit having a lower reduction gear ratio. In other words, the amount of hear generated by such a smaller motor is almost equivalent to that generated by a motor used in conjunction with a reduction gear unit having a lower reduction gear ratio. Therefore, in contrast to when a reduction gear unit having a lower reduction gear ratio is employed, the use of a cycloidal-type reduction gear unit having a higher reduction gear ratio conjures up an issue of how to cool a motor with limited dimensions. Previously proposed approaches have been those of minimizing the amount of heat generated by a loss in a motor, or they concerned various techniques to cool a motor. However, none of them concerned a configuration or construction of a motor that facilitates the cooling of the motor itself.

### SUMMARY OF THE INVENTION

An object of the present invention is to provide an in-wheel motor drive apparatus that facilitates the dissipation of the heat generated by a motor and that is excellent in cooling performance, and to provide a method of designing such an in-wheel motor drive apparatus.

The present invention provides an in-wheel motor drive apparatus that includes a wheel support bearing unit including a rotational raceway ring, to which a wheel is mountable, and a stationary raceway ring. The in-wheel motor drive apparatus also includes a motor configured to drive into rotation the rotational raceway ring of the wheel support bearing unit. A performance of the motor has a motor characteristic that generates a maximum torque in a low-speed-rotation zone (Lo). The motor is cooled mainly by heat dissipation from a stator thereof. The in-wheel motor drive apparatus further includes a reduction gear unit, having a reduction gear ratio of no less than 5, interposed between the motor and the rotational raceway ring of the wheel support bearing unit. A range of number of revolutions (L) within which the motor generates a maximum torque by low-speed-rotation includes a high-output sub-zone (LH) in which a torque is no less than 50% of the maximum torque, and in the high-output sub-zone, a loss in the stator represents no less than 50% of a loss in the motor, with the loss in the motor consisting of copper loss and core loss.

It should be noted that the phrase "[t]he motor is cooled mainly by heat dissipation from a stator thereof" in the above discussion means that the heat dissipation from the stator represents at least half the heat dissipation from the motor as a whole. It should also be noted that "[a] range of number of revolutions (L) within which the motor generates a maximum torque by low-speed-rotation" corresponds to the "low-speed-rotation zone (Lo)".

With such an arrangement of components that are relevant to characteristics of a motor, and with such an assignment of the ratio of heat generated by the stator that makes cooling relatively easy, a heat generated by a motor rotor, which is one of the factors that make the cooling of the motor difficult, can be reduced, thus facilitating the cooling of the motor as a whole. In this way, it becomes possible to cool a motor having small dimensions yet being capable of producing a high output, used in conjunction with a reduction gear unit having a reduction gear ration of no less than 5.

In the present invention, the motor preferably includes cooling medium passage(s) configured to cool coil portion(s) of the stator with a cooling liquid, and the copper loss preferably represents no less than 25% of the loss in the motor.

With such a construction of directly passing a cooling liquid to coil portion(s) of the stator or indirectly letting a cooling liquid pass by coil portion(s) of the stator, and with such a configuration of a motor in which the loss in coil portion(s) more or less represents the heat generated by the motor - both facilitating the heat dissipation from coil portion(s) of the stator, the heat generated by the motor can be effectively dissipated from the motor, thereby allowing for a facilitated cooling of a smaller or compact motor. Especially, with a configuration of the heat generated by the coil portion(s) (i.e. the loss in the coil portion(s)) or the copper loss representing no less than 25% of the loss in the motor as a whole, the heat generated by the motor can be more effectively dissipated from the motor, thereby allowing for a more facilitated cooling of a compact motor.

When the motor includes such cooling medium passage(s), the motor can include a tubular housing covering a rotor thereof, the stator can be fixed to the housing, and the cooling medium passage(s) can be formed in the housing. In that case, the cooling medium passage(s) is/are preferably formed in a circumferential wall portion of the housing, with the circumferential wall portion facing an end portion of the rotor. With such a construction, a stator that generates a large amount of heat can be effectively cooled, thus further facilitating the cooling of the motor as a whole.

In the present invention, the reduction gear unit may be in the form of a cycloidal gear device. Since the cycloidal gear unit has a high reduction gear ratio, the in-wheel motor drive apparatus can be designed to be compact. It is with the use of a reduction gear unit having a high reduction gear ratio, that an advantage of the present invention - namely, an advantage of facilitating the dissipation of the heat generated by the motor - becomes more effective.

The present invention provides a method of designing an in-wheel motor drive apparatus that includes a wheel support bearing unit including a rotational raceway ring, to which a wheel is mountable, and a stationary raceway ring, a motor configured to drive into rotation the rotational raceway ring of the wheel support bearing unit, a performance of the motor having a motor characteristic that generates a maximum torque in a low-speed-rotation zone, with the motor being cooled mainly by heat dissipation from a stator thereof, and a reduction gear unit, having a reduction gear ratio of no less than 5, interposed between the motor and the rotational raceway ring of the wheel support bearing unit, wherein a range of number of revolutions within which the motor generates a maximum torque by low-speed-rotation includes a high-output sub-zone in which a torque is no less than 50% of the maximum torque, and wherein, in the high-output sub-zone, a loss in the stator represents no less than 50% of a loss in the motor, the loss in the motor consisting of copper loss and core loss.

Such a method of designing an in-wheel motor drive apparatus which includes a wheel support bearing unit, a motor and a reduction gear unit, allows for the manufacture of an in-wheel motor drive apparatus which facilitates the dissipation of the heat generated by the motor.

In such a method of designing an in-wheel motor drive apparatus, the motor preferably includes cooling medium passage(s) configured to cool coil portion(s) of the stator with a cooling liquid, and the copper loss preferably represents no less than 25% of the loss in the motor. In this way, the heat generated by the motor can be more effectively dissipated from the motor, thereby allowing for a more facilitated cooling of a compact motor.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a cross sectional view of an in-wheel motor drive apparatus according to an embodiment of the present invention;
Fig. 1B is a graph of a motor characteristic of a motor in the in-wheel motor drive apparatus of Fig. 1A;
Fig. 2 is a cross sectional view taken along the line II-II in Fig. 1A;
Fig. 3 is a cross sectional view of a reduction gear unit in the in-wheel motor drive apparatus of Fig. 1A;
Fig. 4 is a fragmentary enlarged cross sectional view of Fig. 3; and
Fig. 5 is a graph of a motor characteristic.

### DESCRIPTION OF THE PREFERRED EMBODIMENTS

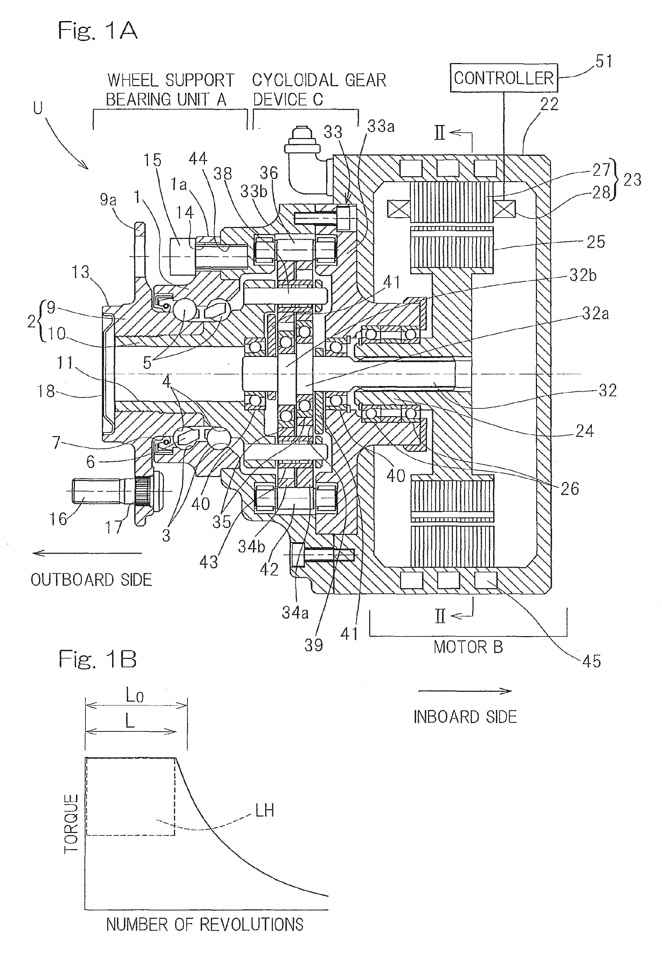

An embodiment of the present invention will be described in connection with Figs. 1A and 1B through Fig. 5. Fig. 1A illustrates an in-wheel motor drive apparatus that includes a vehicle wheel support bearing unit A, a motor B, and a reduction gear unit C interposed between the wheel support bearing unit A and the motor B. The wheel support bearing unit A supports a hub. The hub is coaxially connected with an output shaft 24 of the motor B. The wheel support bearing unit A, the motor B, and the reduction gear unit C are assembled with each other as a single unit to form an in-wheel motor unit U. The reduction gear unit C has a reduction gear ratio of no less than 5. In the illustrated example, the reduction gear unit is in the form of a cycloidal gear device of a structure, in which an input shaft 32 drivingly coupled coaxially with the output shaft 24 of the motor B is formed with eccentric portions 32a and 32b and curvilinear plates 34a and 34b are mounted respectively on the eccentric portions 32a and 32b through corresponding bearing units 35 so that eccentric motions of those curvilinear plates 34a and 34b can be transmitted as a rotational motion to the wheel support bearing unit A.

With such a configuration of the reduction gear unit C being in the form of a cycloidal gear device that converts rotation of the motor B into the eccentric motions of the curvilinear plates 34a, 34b that can be transmitted as a rotational motion to the hub, a reduction gear unit C that is compact yet has a high reduction gear ratio as well as an in-wheel motor drive apparatus that includes such a compactly constructed reduction gear unit C can be provided. A reduction gear unit C in the form of such a cycloidal gear device not only has low parts count that enables compact design, but the one step cycloidal gear device is also effective to provide a reduction gear ratio of 10 or higher.

The motor B to which an electric current is supplied from a battery (not shown), is driven by an external controller 51. The controller 51 is configured to control the drive current to the motor B in response to an accelerator signal outputted from an external accelerator (not shown). The controller 51 is also configured to use the number of revolutions of the motor B detected by a rotation sensor (not shown), to perform rotation control of the motor B. The accelerator includes a vehicle accelerator pedal (not shown) and an accelerator signal generator that is configured to convert the degree of depression of the accelerator pedal into an accelerator signal in the form of an electric signal.

A more particular example of the mechanical components of the in-wheel motor drive apparatus will now be described. It is to be noted that hereinafter in this specification, terms "outboard" and "inboard" represent one side of the vehicle body away from the longitudinal center of the vehicle body and the other side of the vehicle body close to the longitudinal center of the vehicle body, respectively, when assembled in the vehicle body. The wheel support bearing unit A is in the form of a third-generation-type hub bearing unit that includes a rotational inner member 2 having rolling surfaces formed thereon, with that inner member 2 including a hub.

The wheel support bearing unit A includes an outer member 1 having an inner periphery formed with a plurality of rows of rolling surfaces 3, an inner member 2 having formed with rolling surfaces 4 held in face to face relation to those rolling surfaces 3, and a plurality of rows of rolling elements 5 that are interposed between the rolling surfaces 3 in the outer member 1 and the rolling surfaces 4 in the inner member 2. The inner member 2 concurrently serves as a hub on which a vehicle wheel is mounted. The wheel support bearing unit A referred to above is rendered to be a double row angular contact ball bearing unit, in which the rolling elements 5 are employed in the form of balls that are rollingly retained by a ball retainer 6 employed for each row. The rolling surfaces 3 and 4 referred to above are of an arcuately sectioned configuration and are so formed as to have vertex of contact angles outside of bearing. An annular bearing space is delimited between the outer member 1 and the hub 2 positioned inside the outer member 1, and an outboard open end of the annular bearing space so delimited is sealed by a sealing member 7.

The outer member 1 is of a kind that is rendered to be a stationary raceway ring and is also rendered to be of one piece construction having at an outer periphery thereof a flange 1a to be fitted to an outboard housing part 33b of a housing 33 of the reduction gear unit C. This flange 1a has a bolt insertion hole 14 defined at a plurality of circumferential locations thereof. Also, the housing part 33b is provided with a bolt threading hole 44, having an inner periphery helically threaded, at locations alignable with the bolt insertion holes 14. When a mounting bolt 15 inserted through the bolt insertion hole 14 is threadingly engaged in the bolt threading hole 44, the outer member 1 is fitted to the housing part 33b.

The inner member 2 includes an outboard member 9 having a hub flange 9a for the support of an automotive wheel (not shown) and an inboard member 10 having an outboard side, mounted on an inner periphery of the outboard member 9, and integrated together with the outboard member 9 by means of crimping. The rolling surfaces 4 of each row are formed in the outboard member 9 and the inboard member 10, respectively. The inboard member 10 has its center provided with a center bore 11. The hub flange 9a is provided with an insert hole 17 at a plurality of circumferential locations for receiving therein a corresponding hub bolt 16. A cylindrical pilot portion 13 for guiding the automotive wheel and a brake component (both not shown) is defined in the vicinity of a root portion of the hub flange 9a in the outboard member 9 so as to protrude towards the outboard side. This pilot portion 13 has an inner periphery to which a cap 18 is fitted for closing an outboard opening of the center bore 11.

The motor B is of a radial gap type, in which a radial gap is provided between a stator 23, fixed to a tubular housing 22, and a rotor 25 fitted to the output shaft 24. In other words, the housing 22 covers the rotor 25. The output shaft 24 is supported in a cantilever fashion by a cylindrical portion of an inboard housing part 33a of the reduction gear unit C through two, axially spaced bearing units 26. An inboard end of the gap defined between the output shaft 24 and the housing part 33a is sealed by a seal member. Cooling medium passage(s) 45 is/are provided in a circumferential wall portion of the housing 22 over an entire circumference of the wall portion, with the circumferential wall portion facing an end portion of the rotor 25. It is to be noted that "an end portion of the rotor 25" used herein means an outer peripheral surface of the rotor 25, i.e. a radially outwardly end portion of the rotor 25. A supply and drive source (not shown) such as a pump is used to circulate a cooling medium in the cooling medium passage(s) 45. The cooling medium may include, for example, oil(s) or water-soluble coolant(s).

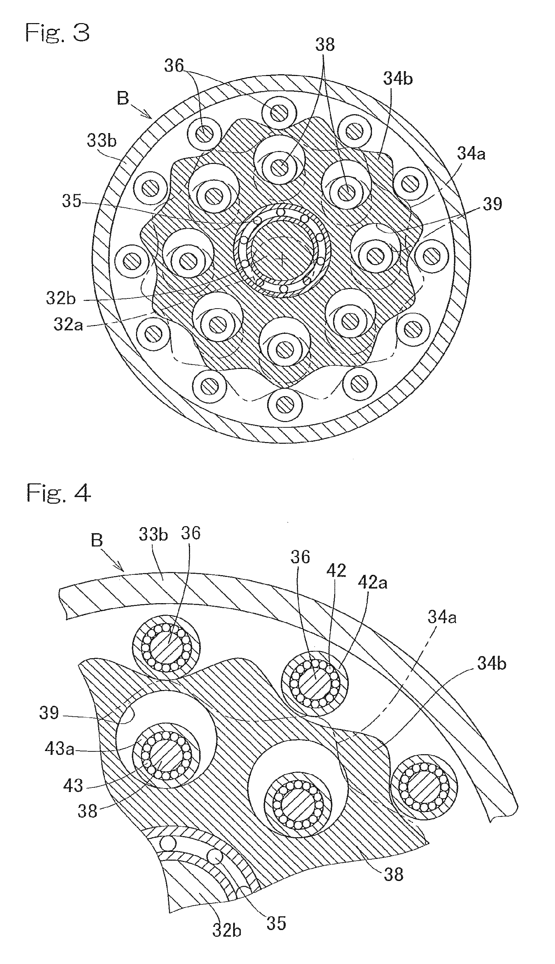

The reduction gear unit C is in the form of a cycloidal gear device as hereinabove described, and the two curvilinear plates 34a and 34b, each being of a contour depicted by the smoothly corrugated trochoidal curve as shown in Fig. 3, are mounted on the respective eccentric portions 32a and 32b of the input shaft 32 through the respective bearings 35. A plurality of outer pins 36 for guiding the respective eccentric motions of the curvilinear plates 34a and 34b on an outer peripheral side are fitted at their opposite ends to the housing part 33b, and a plurality of inner pins 38 fitted to the inboard member 10 of the inner member 2 are engaged having been inserted in a corresponding number of round sectioned throughholes 39 defined inside each of the curvilinear plates 34a and 34b. The input shaft 32 referred to above is fitted by spline to the output shaft 24 of the motor B and is therefore rotatable together with the latter. The input shaft 32 referred to above is rotatably supported by the inboard housing part 33a and an inner diametric surface of the inboard member 10 of the inner member 2 through axially spaced two bearing units 40.

As the output shaft 24 of the motor B rotates, the curvilinear plates 34a and 34b mounted on the input shaft 32 that is integrally rotatable together therewith undergo respective eccentric motions. These eccentric motions of the curvilinear plates 34a and 34b are transmitted as a rotational motion to the inner member 2 by engaging of the inner pins 38 and the throughholes 39. The rotation of the inner member 2 becomes reduced in speed relative to the rotation of the output shaft 24.

The two curvilinear plates 34a and 34b are mounted on the eccentric portions 32a and 32b of the input shaft 32, respectively, having been offset 180° in phase relative to each other so that possible vibrations caused by those eccentric motions can be counterbalanced with each other. A counterweight 41 is mounted on both sides of each of the eccentric portions 32a and 32b and is displaced in a direction counter to the direction of eccentricity of the associated eccentric portion 32a and 32b. In this way, possible vibrations due to inertia couple about an axis perpendicular to a rotational axis that may be induced by the eccentric motion of each of the curvilinear plates 34a and 34b can be counterbalanced.

As shown on an enlarged scale in Fig. 4, the outer pins 36 have respective bearing units 42 mounted thereon and the inner pins 38 similar have respective bearing units 43 mounted thereon, and those bearing units 42 and 43 includes outer rings 42a and 43a that are held in rolling contact with the outer peripheries of the curvilinear plates 34a and 34b and inner peripheries of the throughholes 39, respectively. Accordingly, the respective eccentric motions of the curvilinear plates 34a and 34b can be smoothly transmitted as the rotational motion to the inner member 2 while the resistance of contact between the outer pins 36 and the outer peripheries of the curvilinear plates 34a and 34b and the resistance of contact between the inner pins 38 and the inner peripheries of the throughholes 39 are reduced.

A wheel support bearing unit under discussion may be fixed, at the housing part 33b of the reduction gear unit C or at an outer peripheral portion of the housing 22 of the motor B, to a vehicle body through a suspension system such as a knuckle.

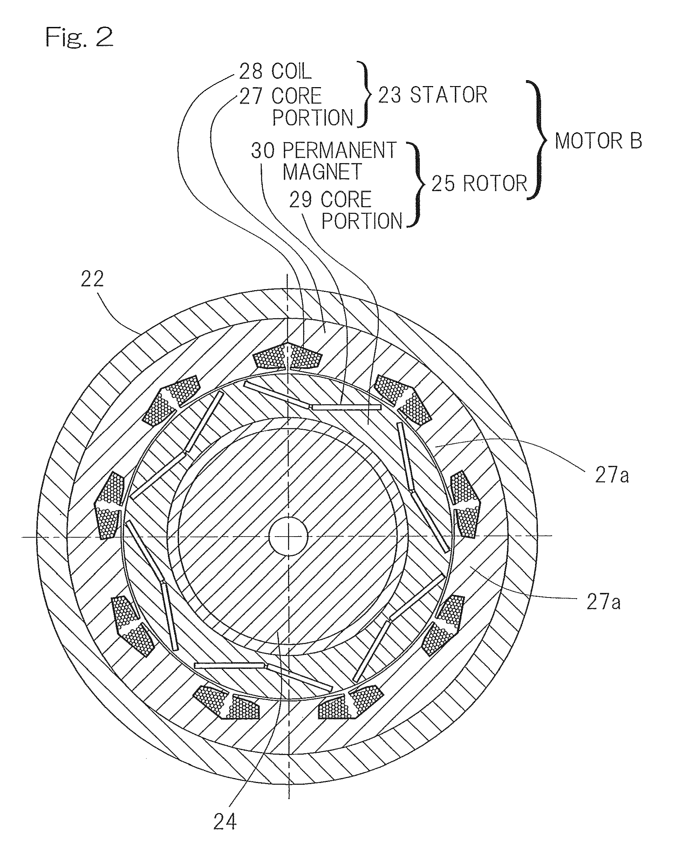

Fig. 2 is a cross sectional view of the motor B (i.e. cross section of Fig. 1A taken along the line II-II). The motor B includes a rotor 25 and a stator 23. The motor B is an IPM (that is, Interior Permanent Magnet) motor of a radial gap type, in which a radial gap is provided between the rotor 25 and the stator 23. In the illustrated example, the rotor 25 includes a core portion 29 made of soft magnetic material(s) and permanent magnets 30 built or embedded in the core portion 29. Each of the permanent magnets 30 is in the form of a flat plate disposed parallel to a shaft axis or longitudinal axis of the motor rotor 25. Those permanent magnets 30 are disposed in a circular row coaxial with the motor rotor 25 so as to represent a serrated shape. In other words, the neighboring permanent magnets are spaced a somewhat distance from each other and are radially inclined in the same direction relative to the radial plane P positioned intermediate within the gap between the neighboring permanent magnets and containing the shaft axis, wherefore the permanent magnets as a whole represent the serrated shape extending in and along the circumferential direction.

The stator 23 includes a core portion 27, made of soft magnetic material(s), and coil portions 28. The core portion 27 is of a ring shape, in which an outer peripheral surface thereof has a round shape in section, and a plurality of teeth 27a each protruding radially towards an inner diametric side are formed in an inner peripheral surface of the core portion 27 so as to assume respective teeth spaced in a circumferential direction. Each of the coil portions 28 is wound around the corresponding tooth 27a of the core portion 27. The core portion 27 has its outer peripheral surface mounted on an inner peripheral surface of the housing 22 and is therefore retained by the housing 22.

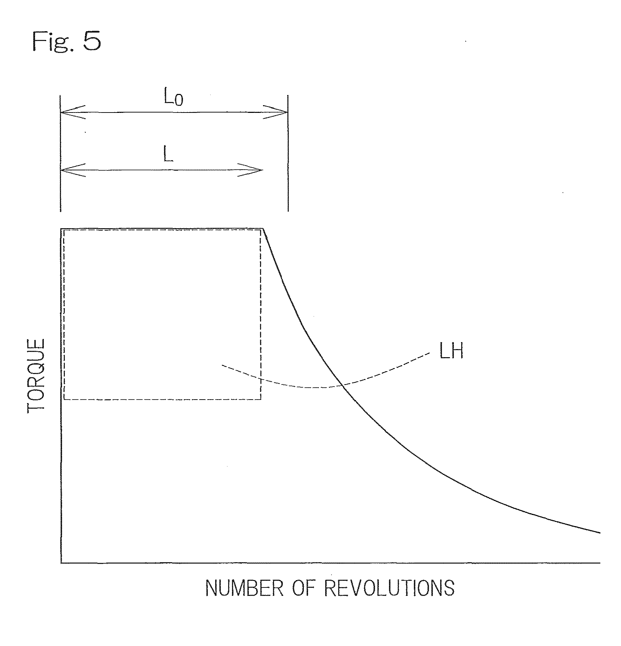

In the embodiment under discussion, the motor B, which may have a motor characteristic such as shown in Fig. 5 with that motor characteristic being obtained based on travel performance of an electrically powered automotive vehicle, is designed as described below. A large torque is required during low-speed rotations over the zone Lo as shown in Fig. 5. The motor operating under such conditions generate a large amount of heat. To address this, the motor B in the embodiment under discussion is designed such that the loss in the motor B (i.e. the heat generated by the motor) mainly occurs in the stator 23 when the motor B is within a range of number of revolutions L in which it generates a maximum torque by low-speed-rotation and such that the motor B is cooled mainly by heat dissipation from the stator 23. Although the zone Lo and the range L are shown to be different in Fig. 1B and Fig. 5, "a range of number of revolutions L within which it (i.e. the motor B) generates a maximum torque by low-speed-rotation" may, for example, correspond to the "low-speed-rotation zone (Lo)".

With such a configuration of the motor B, the heat generated by the motor B can be reduced, thereby leading to an enhanced reliability of the motor B. Moreover, the heat generated by the motor is particularly large when the motor B is within a range of number of revolutions L in which it generates a maximum torque by low-speed-rotation. Therefore, in the embodiment under discussion, the aforementioned configuration is applied to the motor B when the motor B is in a high-output sub-zone (i.e. the zone LH shown in Fig. 5) of the range L, in which a torque is no less than 50% of the maximum torque.

It is desired that, in the high-output sub-zone LH, a loss in the stator 23 represents no less than 50% of a loss in the motor B (i.e. a heat generated by the motor B). Therefore, in the embodiment under discussion, the motor B is designed such that, in the high-output sub-zone LH, a loss in the stator 23 represents no less than 50% of a loss in the motor (i.e. a heat generated by the motor).

It is desired that the motor B is designed such that coil portion(s) 28 of the stator 23 are forcibly cooled by a cooling liquid. In that case, it is more desired that the loss in the coil portion(s) 28 represents no less than 25% of the loss in the motor B as a whole. To address this, the motor B in the embodiment under discussion is designed so as to include cooling medium passage(s) 45 (Fig. 1A) configured to cool the coil portion(s) 28 of the stator 23 with a cooling liquid, and is also designed such that the copper loss represents no less than 25% of the loss in the motor B.

The motor B is further designed such that the cooling medium passage(s) 45 are formed in a circumferential wall portion of a tubular housing 22 with the housing 22 covering the rotor 25. With such a construction, the stator 23 that generates a large amount of heat can be effectively cooled, thus further facilitating the cooling of the motor B as a whole.

Although the aforementioned respective embodiments or examples have been described with particular attention to one vehicle wheel, an in-wheel motor drive apparatus according to any one of the aforementioned embodiments or examples may be applied to more than one wheel and to their corresponding motors. Also, although the aforementioned respective embodiments or examples have been described on the assumption that the reduction gear unit C is in the form of a cycloidal gear device, the present invention can be applied to configurations in which the reduction gear unit C is in the form other than that of a cycloidal gear device.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Outer member
- 2: Inner member (Hub)
- 5: Rolling element
- 23: Stator
- 24: Output shaft
- 25: Rotor
- 28: Coil portion
- 29: Core portion
- 32: Input shaft
- 32a, 32b: Eccentric portion
- 34a, 34b: Curvilinear plate
- 45: Cooling medium passage
- A: Wheel support bearing unit
- B: Motor
- C: Reduction gear unit

## Claims

1. In-wheel motor drive apparatus comprising:
a wheel support bearing unit including a rotational raceway ring, to which a wheel is mountable, and a stationary raceway ring;
a motor configured to drive into rotation the rotational raceway ring of the wheel support bearing unit, a performance of the motor having a motor characteristic that generates a maximum torque in a low-speed-rotation zone, the motor being cooled mainly by heat dissipation from a stator thereof; and
a reduction gear unit, having a reduction gear ratio of no less than 5, interposed between the motor and the rotational raceway ring of the wheel support bearing unit;
wherein a range of number of revolutions within which the motor generates a maximum torque by low-speed-rotation includes a high-output sub-zone in which a torque is no less than 50% of the maximum torque, and
wherein, in the high-output sub-zone, a loss in the stator represents no less than 50% of a loss in the motor, the loss in the motor consisting of copper loss and core loss.

2. The in-wheel motor drive apparatus as claimed in claim 1, wherein the motor includes a cooling medium passage configured to cool a coil portion of the stator with a cooling liquid, and the copper loss represents no less than 25% of the loss in the motor.

3. The in-wheel motor drive apparatus as claimed in claim 2, wherein the motor includes a tubular housing covering a rotor thereof, the stator is fixed to the housing, and the cooling medium passage is formed in the housing.

4. The in-wheel motor drive apparatus as claimed in claim 3, wherein the cooling medium passage is formed in a circumferential wall portion of the housing, the circumferential wall portion facing an end portion of the rotor.

5. The in-wheel motor drive apparatus as claimed in claim 1, wherein the reduction gear unit is in the form of a cycloidal gear device.

6. A method of designing an in-wheel motor drive apparatus that includes: a wheel support bearing unit including a rotational raceway ring, to which a wheel is mountable, and a stationary raceway ring; a motor configured to drive into rotation the rotational raceway ring of the wheel support bearing unit, a performance of the motor having a motor characteristic that generates a maximum torque in a low-speed-rotation zone, the motor being cooled mainly by heat dissipation from a stator thereof; and a reduction gear unit, having a reduction gear ratio of no less than 5, interposed between the motor and the rotational raceway ring of the wheel support bearing unit; wherein a range of number of revolutions within which the motor generates a maximum torque by low-speed-rotation includes a high-output sub-zone in which a torque is no less than 50% of the maximum torque, and wherein, in the high-output sub-zone, a loss in the stator represents no less than 50% of a loss in the motor, the loss in the motor consisting of copper loss and core loss.

7. The method as claimed in claim 6, wherein the motor includes a cooling medium passage configured to cool a coil portion of the stator with a cooling liquid, and the copper loss represents no less than 25% of the loss in the motor.
